# EUROPEAN PATENT APPLICATION

(11) **EP 3 882 789 A1**
(43) Date of publication of application: **22.09.2021**
(21) Application number: 20196144.8
(22) Date of filing: 15.09.2020
(51) Int. Cl.: G06F 16/904, G06F 9/451, H04M 1/725

(54) **METHOD, DEVICE FOR DISPLAYING NOTIFICATION INFORMATION AND STORAGE MEDIUM**

(30) Priority: 20.03.2020 CN 202010199328
(71) Applicant: Beijing Xiaomi Mobile Software Co., Ltd., Beijing 100085 (CN)
(72) Inventor: PAN, Teng, Beijing, Beijing 100085 (CN); MA, Zhenyue, Beijing, Beijing 100085 (CN)
(74) Representative: dompatent von Kreisler Selting Werner - Partnerschaft von Patent- und Rechtsanwälten mbB

(57) **Abstract**

A method for displaying notification information includes: determining the notification information belonging to preset categories; aggregating the determined notification information into a collection of notification information according to the preset categories, where the collection of notification information includes notification information sets of one or more preset categories; and displaying summary information of the collection of notification information on a notification display page, where the notification display page includes a notification bar.

## Description

### CROSS-REFERENCE TO RELATED APPLICATION

The present application claims priority to Chinese Patent Application No. 202010199328.6 filed on March 20, 2020, the disclosure of which is hereby incorporated by reference in its entirety.

### BACKGROUND

Users can obtain various types of information through portable devices. For example, a mobile phone may receive various messages, such as text messages from contacts in an address book, notifications from operators, and push messages from various marketing accounts or information platforms followed. As a result, there are various types of messages and the amount of the messages are very large. These messages can be distributed and displayed in various corresponding applications, or can be all displayed in a notification bar. When displayed in the notification bar, the messages are presented to a user in an order of their receiving time.

### SUMMARY

Various embodiments of the present disclosure provide a method and a device for displaying notification information and a storage medium.

According to a first aspect of embodiments of the present disclosure, there is provided a method for displaying notification information, including: determining the notification information belonging to preset categories; aggregating the determined notification information into a collection of notification information according to the preset categories, where the collection of notification information includes notification information sets of one or more preset categories; and displaying summary information of the collection of notification information on a notification display page, while the notification display page includes a notification bar.

Preferably, displaying summary information of the collection of notification information on a notification display page includes: displaying summary information of notification information sets of each of the preset categories on the notification display page.

Preferably, the method includes: receiving a trigger signal of a first preset type from a display area of the summary information of the collection of notification information; and jumping to a notification information display page according to the trigger signal of the first preset type, and the notification information in the collection of notification information is displayed on the notification information display page, where the notification information display page is different from the notification display page.

Preferably, the method includes: displaying each piece of notification information in a separate area; and displaying all notification information according to a preset order in a waterfall view manner.

Preferably, the method includes: correlating a height of the separate area positively to an amount of text data of corresponding notification information.

Preferably, the method further includes: receiving a trigger signal of a second preset type from the separate area; and displaying a configuration page for notification information displayed in the separate area, where configuration items related to notification information aggregation are displayed on the configuration page.

Preferably, displaying summary information of the collection of notification information on a notification display page includes: displaying the summary information of the collection of notification information on an aggregation bar of the notification display page.

Preferably, the summary information of the collection of notification information and notification information of a non-preset category are displayed according to a preset priority order.

Preferably, the method further includes: classifying the preset categories according to content and/or senders of the notification information.

Preferably, the method further includes: receiving a trigger signal of a one-key clear button in the notification display page; and clearing all notification information in a display area of the non-preset category, and keeping displaying the summary information of the collection of notification information and all notification information in the collection of notification information.

According to a second aspect of the embodiments of the present disclosure, there is provided a device for displaying notification information, including:
a determination module, configured to determine the notification information belonging to preset categories;
an aggregation module, configured to aggregate the notification information classified into a collection of notification information according to the preset categories, where the collection of notification information includes notification information sets of one or more preset categories; and
a display module, configured to display summary information of the collection of notification information on a notification display page, and the notification display page includes a notification bar.

Preferably, the display module is configured to: display summary information of notification information sets of each of the preset categories on the notification display page.

Preferably, the device further includes: a first receiving module, configured to receive a trigger signal of a first preset type from a display area of the summary information of the collection of notification information; and a jump module, configured to jump to a notification information display page according to the trigger signal of the first preset type; the display module is configured to display notification information in the collection of notification information on the notification information display page, where the notification information display page is different from the notification display page.

Preferably, the module is configured to: display each piece of notification information in a separate area; and display all notification information according to a preset order in a waterfall view manner. A height of the separate area is positively correlated to an amount of text data of corresponding notification information.

Preferably, the device further includes: a second receiving module, configured to receive a trigger signal of a second preset type from the separate area; the display module is configured to display a configuration page for notification information displayed in the separate area, where the configuration page displays configuration items related to notification information aggregation.

Preferably, the module is configured to: display the summary information of the collection of notification information on an aggregation bar of the notification display page.

Preferably, the module is configured to display the summary information of the collection of notification information and notification information of a non-preset category according to a preset priority order.

Preferably, the determination module is configured to determine the preset categories according to content and/or senders of the notification information.

Preferably, the first receiving module is configured to receive a trigger signal of a one-key clear button in the notification display page; and a clear module, configured to clear all notification information in a display area of the non-preset category, and keep displaying the summary information of the collection of notification information and all notification information in the collection of notification information.

According to a third aspect of the embodiments of the present disclosure, there is provided a device for displaying notification information, including: a processor; a memory for storing executable instructions of the processor; and the processor is configured to: determine the notification information belonging to preset categories; aggregate the determined notification information into a collection of notification information according to the preset categories, where the collection of notification information includes notification information sets of one or more preset categories; and display summary information of the collection of notification information on a notification display page, while the notification display page includes a notification bar.

According to a fourth aspect of the embodiments of the present disclosure, there is provided a non-transitory computer-readable storage medium. When instructions in the storage medium are executed by a processor of a mobile terminal, the mobile terminal is caused to perform a method for displaying notification information, the method includes: determining the notification information belonging to preset categories; aggregating the determined notification information into a collection of notification information according to the preset categories, where the collection of notification information includes notification information sets of one or more preset categories; and displaying summary information of the collection of notification information on a notification display page, and the notification display page includes a notification bar.

The technical solutions provided by the embodiments of the present disclosure may include the following beneficial effects: by aggregating the notification information according to the preset categories to form the collection of notification information and displaying it on the notification display page, the notification information can be sorted effectively, and the notification function of the notification display page is improved, thereby reducing the caused interference to the terminal user.

It should be noted that the above general description and the following detailed description are merely exemplary and explanatory and should not be construed as limitation to the disclosure.

### BRIEF DESCRIPTION OF THE DRAWINGS

The accompanying drawings here, which are incorporated in the specification and constitute a part of the disclosure, show embodiments of the present disclosure. The drawings along with the specification explain the principles of the present disclosure.
FIG. 1 shows a flowchart of a method for displaying notification information according to some embodiments;
FIG. 2 shows a display example of a collection of notification information according to some embodiments;
FIG. 3 shows a display example of a collection of notification information being unfolded that includes summary information of a notification information set according to some embodiments;
FIG. 4 shows a flowchart of a method in step S13 of FIG. 1 for displaying summary information of a collection of notification information on a notification display page;
FIG. 5 shows a display example of a notification information set according to some embodiments;
FIG. 6 shows a flowchart of a method for displaying notification information according to some embodiments;
FIG. 7 shows a display example of a notification information display page 201 according to some embodiments;
FIG. 8 shows a flowchart of displaying each piece of notification information in a waterfall view manner;
FIG. 9 exemplarily shows a flowchart of a method for displaying notification information according to some embodiments;
FIG. 10 shows a flowchart of a method for displaying notification information according to some embodiments;
FIG. 11 shows a display example of an operation menu page according to some embodiments;
FIG. 12 shows a flowchart of a method for displaying notification information according to some embodiments where configuration items related to notification information aggregation include a priority setting item;
FIG. 13 shows a flowchart of a method for displaying notification information according to some embodiments where configuration items related to notification information aggregation include an operation item for terminating performing classification according to preset categories;
FIG. 14 shows a flowchart of a method for displaying notification information according to some embodiments where configuration items related to notification information aggregation include an operation item for classification feedback;
FIG. 15 shows a flowchart of a method for displaying notification information according to some embodiments;
FIG. 16 shows a flowchart of a method for displaying summary information of a collection of notification information on a notification display page in step S13 shown in FIG. 1;
FIG. 17 shows a flowchart of a method for displaying notification information according to some embodiments;
FIG. 18 shows a flowchart of a method for displaying notification information according to some embodiments;
FIG. 19 shows a flowchart of a method for displaying notification information according to some embodiments;
FIG. 20 shows a flowchart of a method for displaying notification information according to some embodiments;
FIG. 21 shows a flowchart of a method for displaying notification information according to some embodiments;
FIG. 22 shows a flowchart of a method for displaying notification information according to some embodiments;
FIG. 23 shows a block diagram of a device for displaying notification information according to some embodiments; and
FIG. 24 shows a block diagram of a device for displaying notification information (a general structure of a mobile terminal) according to some embodiments.

### DETAILED DESCRIPTION

Exemplary embodiments will be described in detail herein, examples of which are illustrated in the accompanying drawings. When the following description refers to the drawings, the same reference sign in the different figures is used to denote the same or similar elements unless otherwise indicated. The embodiments described in the following exemplary embodiments do not represent all embodiments consistent with the present invention. Instead, they are merely examples of devices and methods consistent with aspects of the present disclosure as detailed in the appended claims.

In a typical mobile terminal, contents of notification information can become very complicated, and the display of the notification information can appear chaotic. Therefore, when the user accesses the notification bar, it can be difficult for the user to locate messages which the user considers important. Often, the notification bar does not play a notifying role, but causes serious interference to the user of the smart terminal.

Various embodiments of the present disclosure can improve the notification function of a notification display page and reduce the interference caused by the notification information to the user of the smart terminal.

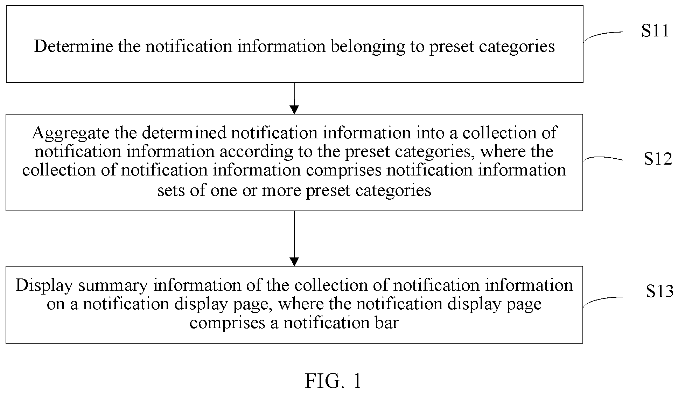

FIG. 1 shows a flowchart of a method for displaying notification information according to some embodiments. As shown in FIG. 1, the method for displaying notification information is applied to a terminal and includes the following steps.

In step S11, notification information belonging to preset categories is determined. In other words, upon receiving a notification information, a preset category is determined to which the notification information belongs.

In step S12, the determined notification information is aggregated into a collection of notification information according to the preset categories. The collection of notification information includes notification information sets of one or more preset categories and preferably at least one notification information belonging to one of the preset categories.

In step S13, summary information of the collection of notification information is displayed on a notification display page, and the notification display page includes a notification bar.

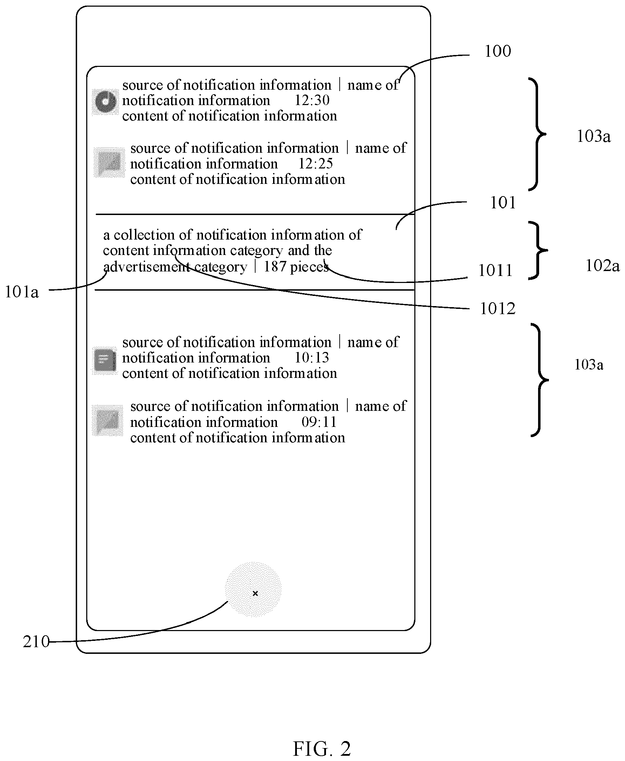

In the present disclosure, the notification information belonging to the preset category is aggregated according to the preset category to form the collection of notification information, and the collection of notification information includes notification information sets of one or more preset categories. The summary information of the collection of notification information is displayed on the notification display page, and the notification display page includes the notification bar. The summary information of the collection of notification information is displayed in the notification bar. FIG. 2 shows a display example of the collection of notification information according to some embodiments, and as shown in FIG. 2, the collection of notification information 101 is displayed in the notification bar 100.

The summary information of the collection of notification information may include the summary information of the notification information set of the preset category, that is, the summary information of all the notification information belonging to the preset category. As shown in FIG. 2, the summary information of the collection of notification information 101 is the summary information of all the notification information belonging to the preset category. An area for displaying the summary information of the collection of notification information 101 may display the summary information of all the notification information belonging to the preset category. The summary information of the collection of notification information 101 may include a name 1012 of the collection of notification information 101 and the number 1011 of pieces of notification information in the collection of notification information 101.

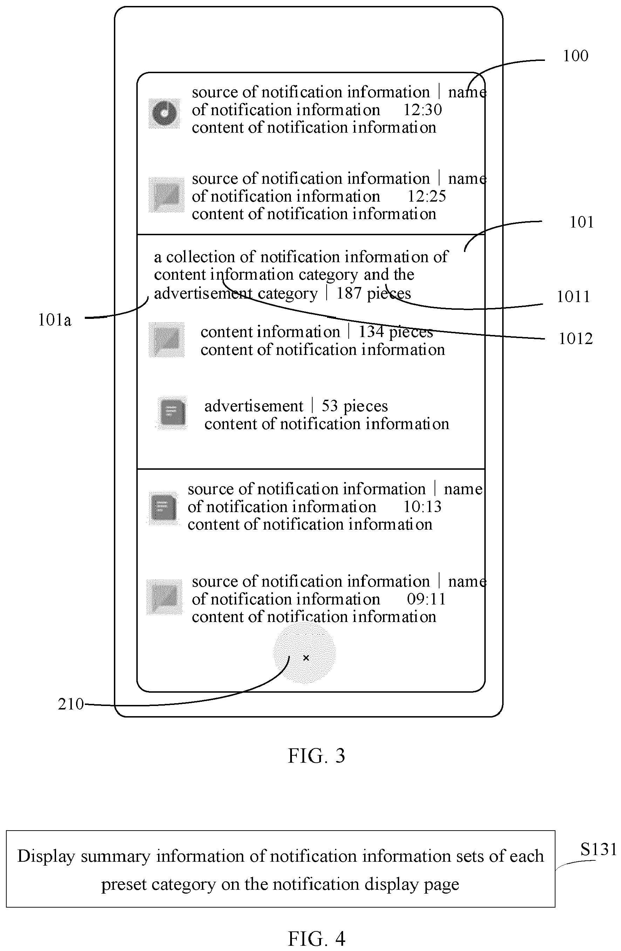

By clicking, double-clicking or other triggering operations on a display area 101a of the summary information, the display area 101a of the summary information of the collection of notification information 101 can be unfolded to display the summary information of the notification information set of each preset category. FIG. 3 shows a display example of the collection of notification information being unfolded according to some embodiments, where summary information of the notification information set is included.

By aggregating the notification information according to the preset category to form the collection of notification information and displaying it on the notification display page, the notification information can be sorted effectively, and the notification function of the notification display page is improved, thereby reducing the caused interference to the terminal user. The display herein can be referred to as a first-level display page of the notification bar.

The summary information of the collection of notification information may also include summary information of the notification information set of each preset category. That is, according to different preset categories, the summary information of each notification information set is formed, and is displayed in the notification bar. A position where the display area of the summary information of each notification information set is located may be different. That is, the summary information of each notification information set is displayed at different positions in the notification bar. FIG. 4 shows a flowchart of a method in step S13 of FIG. 1 for displaying summary information of the collection of notification information on the notification display page. As shown in FIG. 4, in step S131, summary information of the notification information set of each preset category is displayed on the notification display page.

The summary information of the notification information set of each preset category is displayed on the notification display page, and can be displayed at different positions.

A height of the area for displaying the summary information of each notification information set can be set according to display needs, and can be the same or different. The summary information of the notification information set may include one or more of the following: a name of the preset category, the number of pieces of notification information in the notification information set, and content of notification information selected according to a first preset rule.

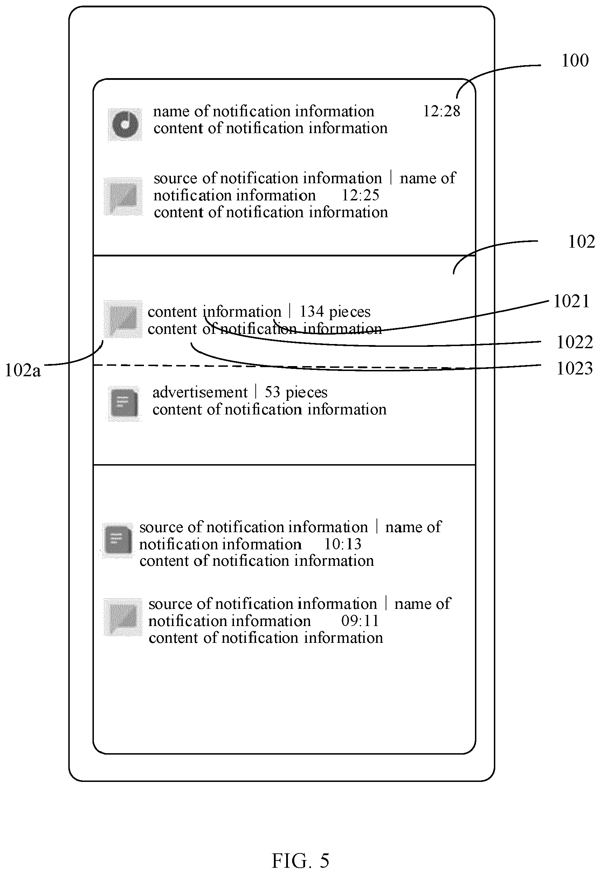

FIG. 5 shows a display example of a notification information set according to some embodiments. The notification information set 102 is displayed on the notification display page. The summary information of the notification information set 102 includes the summary information of notification information sets of two preset categories. The summary information of each notification information set includes the name 1022 of the preset category, the number 1021 of pieces of notification information in the notification information set, and the content 1023 of notification information selected according to the first preset rule. The first preset rule may be determined according to customer needs. For example, the first preset rule is in chronological order, that is, the content of the most recent notification information is selected to be displayed.

A height of the display area 102a of the notification information set 102 can be determined according to the needs of the display. For example, the name 1022 of the preset category and the number 1021 of pieces of notification information in the notification information set are required to be displayed on one row, and a first part of the subject and a first part of the text of the content 1023 of notification information selected according to the first preset rule are displayed, and both the subject and the text only need a display height with one row. In this way, the height of the display area 102a of the notification information set 102 can be a height of three rows. If the entire subject and the entire text of the content 1023 of notification information selected according to the first preset rule are displayed, the height of the display area 102a can be adjusted to display the entire content of the subject and the text of the content of notification information selected according to the first preset rule.

By displaying notification information sets of different preset categories on the notification display page, the notification information with different categories is clearly provided to the terminal user, thereby further improving the notification function of the notification display page, and better reducing the caused interference to the terminal user.

Whether to display the summary information of the collection of the notification information or the summary information of the notification information set on the notification display page can be selected by the terminal user. For example, the terminal user selects, on a corresponding page for the notification setting, whether to display the summary information of the collection of the notification information or the summary information of the notification information set on the notification display page

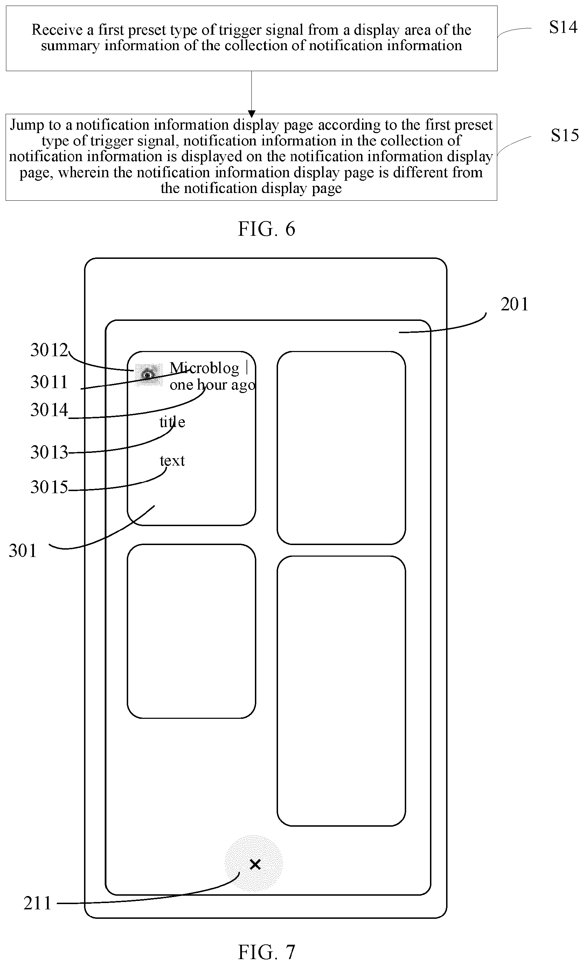

The embodiments of the present disclosure provide a method for displaying notification information. FIG. 6 shows a flowchart of a method for displaying notification information according to some embodiments, and as shown in FIG. 6:
in step 14, a trigger signal of a first preset type is received from a display area of the summary information of the collection of the notification information;
in step 15, according to the trigger signal of the first preset type, a notification information display page is jumped to, and the notification information in the collection of the notification information is displayed on the notification information display page, and the notification information display page is different from the notification display page.

When the trigger signal of the first preset type is received from the display area of the summary information of the collection of the notification information, the notification information display page is jumped to, and each notification information in the collection of the notification information is displayed on the notification information display page. The trigger signal of the first preset type may be any trigger signal, for example, a click or a double-click. The trigger signal of the first preset type may be different from the above-mentioned trigger signal for unfolding.

The trigger signal of the first preset type from the display area of the summary information of the collection of the notification information may be a trigger operation for the summary information of the collection of the notification information, or a trigger operation for the summary information of the notification information set of each preset category in the collection of the notification information. When it is the trigger operation for the summary information of the collection of the notification information, the notification information display page is jumped to, and the notification information in each preset category is sequentially displayed on the notification information display page according to a preset rule. The notifications information in each preset category is displayed in a preset order. When it is the trigger operation for the summary information of notification information set of each preset category in the collection of the notification information, the notification information display page is jumped to, and each notification information in the preset category is sequentially displayed on the notification information display page according to the preset order.

As shown in FIG. 2, after the trigger signal of the first preset type from the display area 101a of the summary information of the collection of the notification information 101 is received, the notification information display page 201 is jumped to, as shown in FIG. 7, which shows a display example of a notification information display page 201 according to some embodiments.

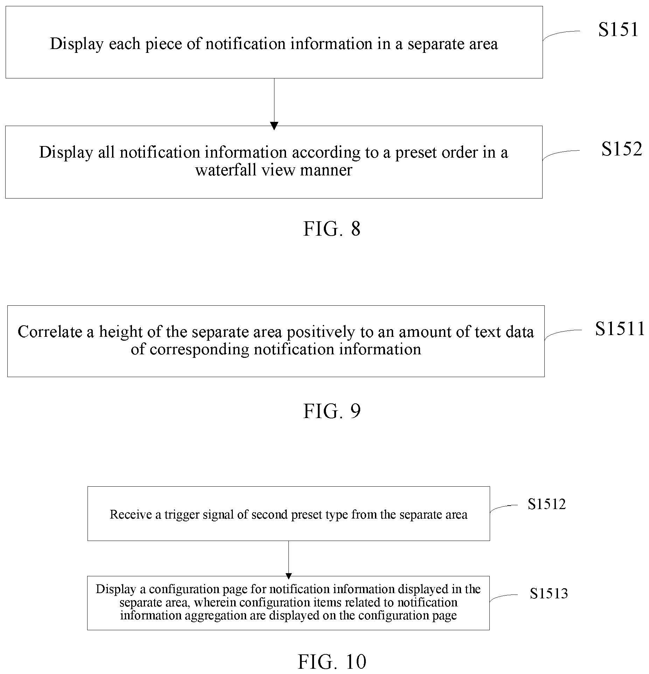

The notification information in the collection of the notification information is displayed on the notification information display page 201. Each piece of notification information is displayed in a separate area. When multiple pieces of notification information are displayed, the multiple pieces of notification information are displayed in a waterfall view manner. The embodiments of the present disclosure provide a method for displaying notification information. FIG. 8 shows a flowchart of displaying each piece of notification information in a waterfall view manner, and as shown in FIG. 8:
in step 151, each piece of notification information is displayed in a separate area;
in step 152, all notification information is displayed in a waterfall view manner according to a preset order.

In the present disclosure, each piece of notification information may be displayed in the separate area. For example, each piece of notification information may be displayed on a card. Each piece of notification information in the collection of the notification information may be displayed on the notification information display page in the waterfall view manner according to the preset order. The waterfall view manner is a waterfall view layout manner, where multiple cards are displayed in M columns and N rows, and the page can be scrolled up and down through a scroll bar to display different card information. As shown in FIG. 7, the separate area 301 is in the form of a card, and one piece of notification information is displayed on each card, and the multiple cards are displayed in two columns. In an actual application, it is not limited to the use of two columns, and various display manners such as one column, three columns, or four columns can also be used. The number of rows can be determined according to the number of pieces of notification information in the collection of the notification information and the number of columns. In this way, the terminal user can conveniently browse each piece of notification information in the collection of the notification information on the notification information display page. The notification information display page may be referred to as a second-level display page of the notification bar.

The preset order can be determined according to customer needs. For example, the notification information is displayed in chronological order or displayed in sequence according to customer preferences.

By setting the first-level display page and the second-level display page of the notification bar, not only the interference caused by too much notification information is reduced, but also it is convenient for the user to browse the related notification information.

The embodiments of the present disclosure provide a method for displaying notification information. FIG. 9 exemplarily shows a flowchart of a method for displaying notification information according to some embodiments.

In step 1511, a height of the separate area is positively correlated to an amount of text data of corresponding notification information.

The height of the separate area may be positively correlated to an amount of text data of corresponding notification information. For example, entire content of the notification information can be displayed in the separate area. When the amount of text data of the notification information is relatively small, less content needs to be displayed, thus the height of the separate area is smaller; while the amount of text data of the notification information is relatively large, more content needs to be displayed, thus the height of the separate area is larger. With this setting, the terminal user can more easily read the relevant content of each piece of notification information.

The content of the notification information displayed in each separate area can be set as needs. As shown in FIG. 7, the content of the notification information displayed in each separate area 301 may include one or more of the following:
a source 3011 of the notification information, an icon 3012 of the source of the notification information, a title 3013 of the notification information, sent time 3014 of the notification and content 3015 of the notification information. The source may indicate an origin of the notification information. For example, the source 3011 of the notification information in the display area of the separate area in FIG. 7 is Microblog, and the icon 3012 of the source of the notification information is an icon of the Microblog.

In order to facilitate to perform operations on the notification information display page, the present disclosure provides a method for displaying notification information. FIG. 10 shows a flowchart of a method for displaying notification information according to some embodiments, and as shown in FIG. 10:
in step 1512, a trigger signal of the second preset type is received from the separate area;
in step 1513, a configuration page for the notification information displayed in the separate area is displayed, and configuration items related to notification information aggregation are displayed on the configuration page.

When the trigger signal of the second preset type is received from the separate area, the configuration page for the notification information displayed in the separate area is displayed, and configuration items related to notification information aggregation are displayed on the configuration page. The second trigger signal of the preset type may be any type of trigger signal, for example, a long press.

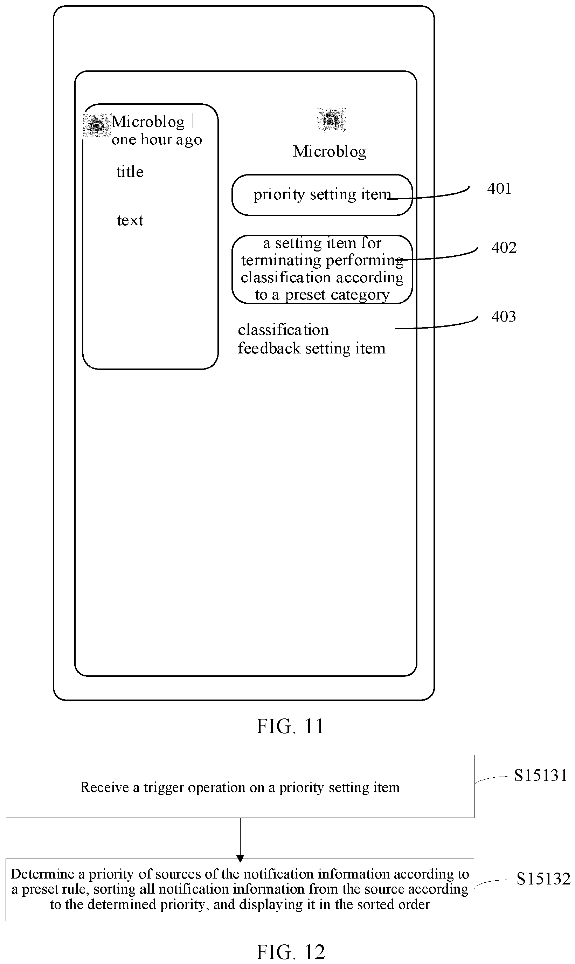

After the trigger signal of the second preset type of the separate area 301 (which may be a card area) in the notification information display page 201 as shown in FIG. 7 is received, the configuration page for the notification information is entered, as shown in FIG. 11, which shows a display example of an operation menu page according to some embodiments. The configuration page in FIG. 11 displays configuration items related to the notification information aggregation. The configuration items related to the notification information aggregation refer to configuration information used when the notification information is aggregated, for example, a priority order in the notification information set when the notification information is aggregated; whether the source where the notification information is located continuing to aggregate, and so on.

The present disclosure provides a method for displaying notification information. FIG. 12 shows a flowchart of a method for displaying notification information, when configuration items related to notification information aggregation include a priority setting item, according to some embodiments, and as shown in FIG. 12:
in step 15131, a trigger operation on the priority setting item is received;
in step 15132, a priority of sources of the notification information is determined according to a preset rule, and all notification information from the source is sorted according to the determined priority, and is displayed in the sorted order.

As shown in FIG. 11, the configuration items related to the notification information aggregation include a priority setting item 401. When the trigger operation on the priority setting item 401, for example, a click on the priority setting item 401, is received, the priority of the source of the notification information can be determined according to a preset rule, and all the notification information from the source is sorted according to the determined priority, and is displayed in the sorted order. The preset rule can be set according to user needs, for example, the priority of the source of the notification information is decreased to the lowest, or the priority of the source of the notification information is increased to the highest, or the priority of the source of the notification information is decreased by one level.

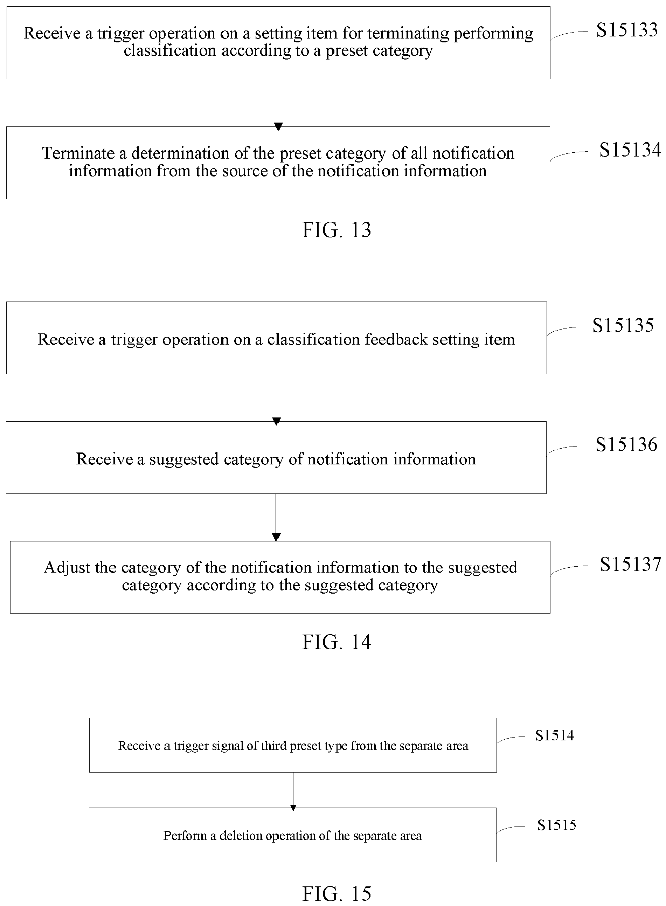

The present disclosure provides a method for displaying notification information. FIG. 13 shows a flowchart of a method for displaying notification information, when configuration items related to notification information aggregation include an operation item for terminating performing classification according to preset categories, according to some embodiments, and as shown in FIG. 13:
in step 15133, a trigger operation on a setting item for terminating performing classification according to a preset category is received;
in step 15134, a determination of the preset category of all notification information from the source of the notification information is terminated.

As shown in FIG. 11, the operation menu page includes the setting item 402 for terminating performing classification according to a preset category. When the trigger operation on the setting item 402 for terminating performing classification according to a preset category is received, for example, the setting item 402 is clicked, the determination of the preset category of all notification information from the source of the notification information, the aggregation and display of the collection of notification information can be terminated. The determination and the subsequent procedures are no longer performed on the preset category of all the notification information from the source. All the notification information from the source can be displayed directly on the notification display page.

The present disclosure provides a method for displaying notification information. FIG. 14 shows a flowchart of a method for displaying notification information, when configuration items related to notification information aggregation include a classification feedback setting item, according to some embodiments, and as shown in FIG. 14:
in step 15135, a trigger operation on a classification feedback setting item is received;
in step 15136, a suggested category of notification information is received; and
in step 15137, according to the suggested category, the category of the notification information is adjusted to the suggested category.

As shown in FIG. 11, the operation menu page includes the category feedback setting item 403. When the trigger operation on the classification feedback setting item 403 is received, for example, when the category feedback setting item 403 is clicked, the user may be provided with a choice page of the suggested category, and the user selects the suggested category. After the suggested category selected by the user is received, the notification information is adjusted to be of the suggested category.

The present disclosure provides a method for displaying notification information. FIG. 15 shows a flowchart of a method for displaying notification information according to some embodiments, and as shown in FIG. 15:
in step 1514, a trigger signal of the third preset type is received from the separate area; and
in step 1515, a deletion operation is performed on the separate area.

When the trigger signal of third preset type is received from the separate area, the deletion operation may be performed on the separate area. After the separate area is deleted, the corresponding notification information is also deleted. The third preset type of trigger signal may be any type of trigger signal, such as sliding to the left or sliding to the right.

The trigger signal of the second preset type and the third preset type of trigger signal may be different.

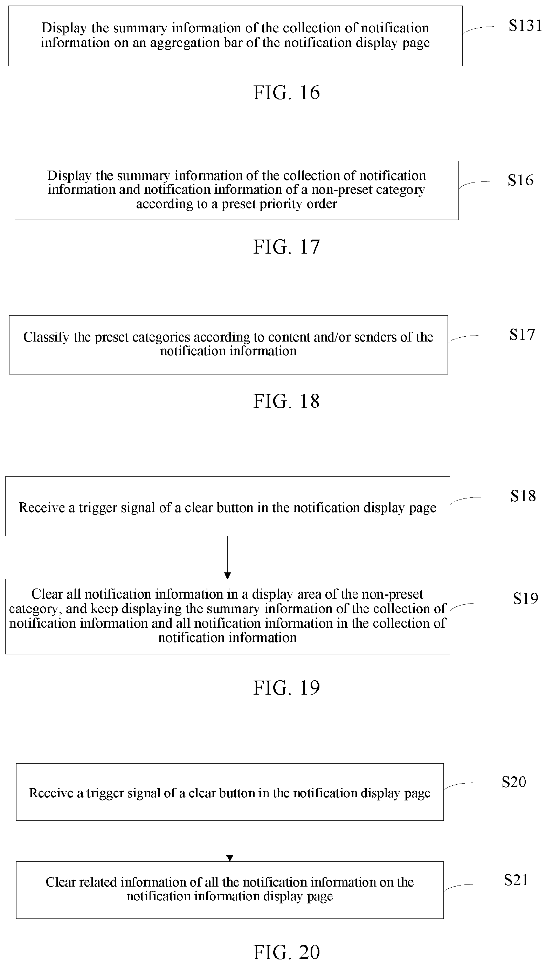

The present disclosure provides a method for displaying notification information. FIG. 16 shows a flowchart of a method in step S13 shown in FIG. 1 for displaying summary information of a collection of notification information on a notification display page, and as shown in FIG. 16:
in step 131, the summary information of the collection of the notification information is displayed in an aggregation bar of the notification display page.

On the notification display page, the summary information of the collection of the notification information can be displayed in the aggregation bar. The summary information of each preset category of notification information set can be displayed in the aggregation bar. As shown in FIG. 2, the display area 101a of the summary information 101 of the collection of the notification information is displayed in the aggregation bar.

Different display boxes can be set in the aggregation bar according to the content to be displayed. For example, as described above, when the summary information of the collection of the notification information includes the name of the collection of the notification information and the number of pieces of notification information in the collection of the notification information, the display box (for example, a display box for the name of the collection of the notification information) can be set accordingly. The height of the aggregation bar can be determined according to the summary information to be displayed.

The present disclosure provides a method for displaying notification information. FIG. 17 shows a flowchart of a method for displaying notification information according to some embodiments, and as shown in FIG. 17:
in step S16, the summary information of the collection of the notification information and notification information of a non-preset category are displayed according to a preset priority order.

When the notification information is aggregated according to the preset category, the notification information that cannot be classified by the preset category, that is, the notification information of non-preset category, is displayed on the notification display page along with the summary information of the collection of the notification information simultaneously. The display manner may be in the preset priority order. The preset priority order can be determined according to the customer needs, for example, it can be determined according to the user's preferences, click frequency, etc. As shown in FIG. 2, the summary information of the collection of the notification information 101 and the notification information 103 of non-preset category are displayed on the notification bar of the terminal according to the preset priority order, and the display area 101a is the display area of the collection of the notification information 101, and the display area 103a is the display area of the notification information 103 of non-preset category.

In an actual operation, the notification information that cannot be classified into preset categories can also be classified into "miscellaneous" category, that is, all notification information can be classified, and the summary information of all the collection of the notification information can be displayed on the notification display page according to the preset priority order.

The present disclosure provides a method for displaying notification information. FIG. 18 shows a flowchart of a method for displaying notification information according to some embodiments, and as shown in FIG. 18:
in step 17, the preset categories are determined according to content and/or senders of the notification information.

The preset categories may be determined according to the content and/or the senders of the notification information. For example, the preset categories may be determined according to the content of the notification information, and may include content information category and/or advertisement category. If the preset categories include the content information category and the advertisement category, the terminal determines notification information of the content information category and the notification information of the advertisement category among all the received notification information, and forms the notification information set of the content information category and the notification information set of the advertisement category so as to form the collection of the notification information of the content information and advertisement category. In the display example of the collection of the notification information shown in FIG. 2, the collection of the notification information of the content information and advertisement category is displayed in the notification bar. The preset categories can also be determined according to the senders. For example, according to different senders, the notification information is classified into different notification information sets.

According to the method for displaying notification information provided by the present disclosure, the notification information is aggregated according to the content and/or the sender of the notification information to form the collection of notification information, and the summary information of the collection of notification information is displayed on the notification display page, so that the notification information can be displayed in classification, thereby reducing the interference caused by too much notification information and improving the efficiency of the notification bar.

The present disclosure provides a method for displaying notification information. FIG. 19 shows a flowchart of a method for displaying notification information according to some embodiments, and as shown in FIG. 19:
in step 18, a trigger signal of a one-key clear button in the notification display page is received;
in step 19, all notification information in display areas of the non-preset category is cleared, and the summary information of the collection of notification information and all the notification information in the collection of the notification information are kept.

On the notification display page, that is, the first-level display page, a one key clear item can be set, for example, the one key clear button 210 shown in FIG. 2. The user can click the one key clear item to clear all notification information of the non-preset category on the notification display page. On this page, when the clear operation is performed, the summary information of the collection of the notification information is not cleared. That is, on the first-level display page, the summary information of the collection of the notification information and the notification information in the collection of the notification information are not cleared, which are only cleared on the notification information display page (the second-level display page), thereby avoiding deleting the notification information in the collection of the notification information by mistake.

When all the notification information is classified, it is not necessary to set the one key clear button.

The present disclosure provides a method for displaying notification information. FIG. 20 shows a flowchart of a method for displaying notification information according to some embodiments, and as shown in FIG. 20:
in step 20, a trigger signal of a one key clear button in the notification information display page is received; and
in step 21, related information of all the notification information on the notification information display page is cleared.

On the notification information display page, the one key clear button may be provided, such as the one key clear button 211 shown in FIG. 7. The user can click the one key clear button to clear all notification information displayed on the notification information display page.

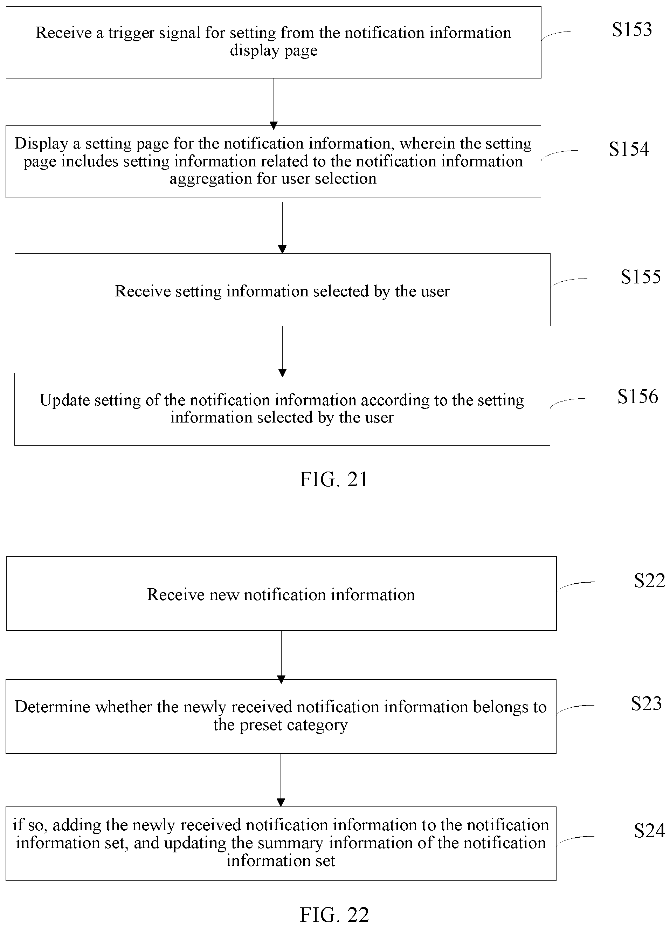

The present disclosure provides a method for displaying notification information. FIG. 21 shows a flowchart of a method for displaying notification information according to some embodiments, and as shown in FIG. 21:
In step 153, a trigger signal for setting is received from the notification information display page;
In step 154, a notification information setting page is displayed; the setting page includes setting information related to the notification information aggregation for user selection;
In step 155, setting information selected by the user is received; and
In step 156, setting of the notification information is updated according to the setting information selected by the user.

On a preset category page, a "setting" item can be provided, and the user can click the "setting" item to enter the setting page. The user can select the setting information related to the notification information aggregation on the setting page. After the setting information selected by the user is received, the setting of the notification information is updated according to the setting information selected by the user. For example, the setting may be whether it is allowed to aggregate notification information belonging to the preset category to form the collection of the notification information and display it in the form of the collection, selecting the source of the notification information, selecting the display format of the notification information, and so on.

The present disclosure provides a method for displaying notification information. FIG. 22 shows a flowchart of a method for displaying notification information according to some embodiments, and as shown in FIG. 22:
in step 22, new notification information is received;
in step 23, it is determined whether the newly received notification information belongs to the preset category; and
in step 24, when it is determined that a newly received notification information belongs to a preset category, the newly received notification information is added to the collection of notification information set, and the summary information of the notification information set is updated.

When a new notification information is received, it is determined whether the newly received notification information belongs to the preset category, and when that is true, the newly received notification information is added to the notification information set, and the summary information of the notification information set is updated. In the displayed example of the notification information set shown in FIG. 3, the number of pieces of notification information in the notification information set is 134. If the newly received notification information belongs to the preset category, the newly received notification information is added to the notification information set, and the number 1021 of pieces of notification information in the notification information set is updated to 135. If the first preset rule is to select and display the notification information in chronological order, the content 1023 of the notification information selected according to the first preset rule is updated as the content of the newly received notification information. In addition, the summary information of the collection of the notification information is also updated. For example, as shown in FIG. 2, the number of pieces of notification information in the collection of the content information and advertisement notification information is updated from 187 to 188.

When the new notification information does not belong to any preset category, the newly received notification information is notification information of the non-preset category.

In the present disclosure, the collection of the notification information belonging to the preset categories is displayed on the notification display page (the first-level display page), and the content of each piece of notification information can be displayed in detail step by step according to the user's browsing needs, for example, each piece of notification information can be displayed on the notification information display page (the second-level display page). In this way, the various notifications received can be effectively sorted and displayed to guide the user to quickly find important notification information or interested notification information, thereby improving the notification function of the notification display page, and reducing the interference caused by the notification information for the terminal user.

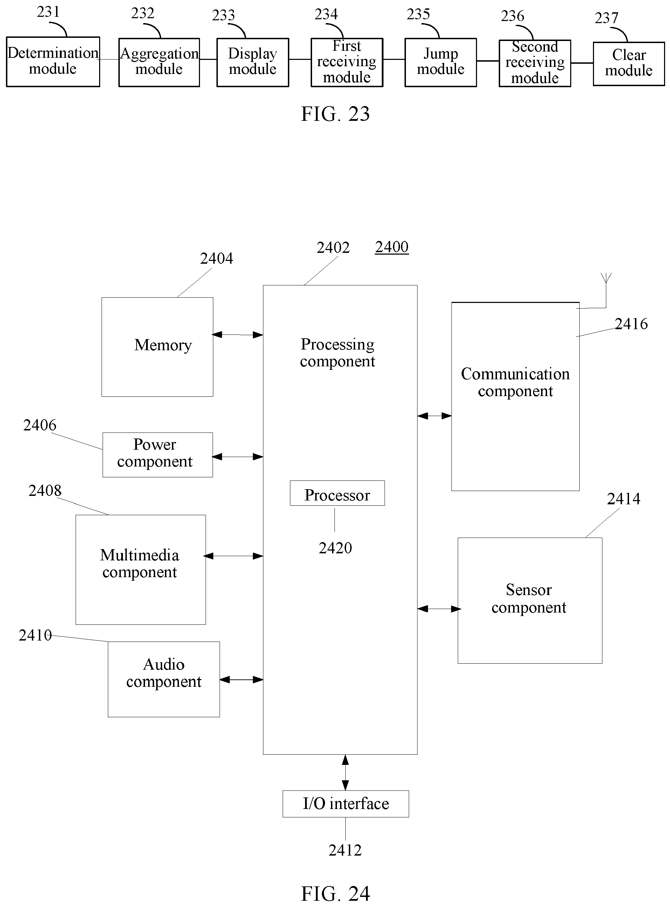

FIG. 23 shows a block diagram of a device for displaying notification information according to some embodiments. Referring to FIG. 23, the device includes a determination module 231, an aggregation module 232, a display module 233, a first receiving module 234, a jump module 235, a second receiving module 236, and a clear module 237.

The determination module 231 is configured to determine notification information belonging to preset categories.

The aggregation module 232 is configured to aggregate the determined notification information into a collection of notification information according to the preset categories, where the collection of notification information includes of notification information sets of one or more preset categories.

The display module 233 is configured to display summary information of the collection of notification information on a notification display page, and the notification display page includes a notification bar.

The display module 233 is configured to display summary information of the notification information sets of each preset category on the notification display page.

The device further includes: the first receiving module 234, configured to receive a trigger signal of a first preset type from a display area of the summary information of the collection of notification information; and the jump module 235, configured to jump to a notification information display page according to the trigger signal of the first preset type.

The display module 233 is configured to display notification information in the collection of notification information on the notification information display page, where the notification information display page is different from the notification display page.

The display module 233 is configured to: display each piece of notification information in a separate area; and display all notification information according to a preset order in a waterfall view manner.

A height of the separate area is positively correlated to an amount of text data of corresponding notification information.

The display device further includes: the second receiving module 236, configured to receive a trigger signal of second preset type from the separate area.

The display module 233 is configured to display a configuration page for notification information displayed in the separate area, where the configuration page displays configuration items related to notification information aggregation.

The display module 233 is configured to display the summary information of the collection of notification information on an aggregation bar of the notification display page.

The display module 233 is configured to display the summary information of the collection of notification information and notification information of a non-preset category according to a preset priority order.

The determination module 231 is configured to determine the preset categories according to content and/or senders of the notification information.

The first receiving module 234 is configured to receive a trigger signal of a one key clear button in the notification display page.

The clear module 237 is configured to clear all notification information in a display area of the non-preset category, and keep displaying the summary information of the collection of notification information and all notification information in the collection of notification information.

Regarding the device in the above embodiment, the specific manner in which each module performs operations has been described in detail in the embodiment related to the method, and will not be elaborated here.

FIG. 24 shows a block diagram of a device 2400 for displaying notification information. For example, the device 2400 may be a mobile phone, a computer, a digital broadcasting terminal, a messaging device, a game console, a tablet device, a medical device, a fitness device, a personal digital assistant, and so on.

Referring to FIG. 24, the device 2400 may include one or more of the following components: a processing component 2402, a memory 2404, a power component 2406, a multimedia component 2408, an audio component 2410, an input/output (I/O) interface 2412, a sensor component 2414, and a communication component 2416.

The processing component 2402 typically controls the overall operations of the device 2400, such as the operations associated with display, telephone calls, data communications, camera operations, and recording operations. The processing component 2402 can include one or more processors 2420 to execute instructions to perform all or part of the steps in the above described methods. Moreover, the processing component 2402 can include one or more modules to facilitate the interaction between the processing component 2402 and other components. For example, the processing component 2402 can include a multimedia module to facilitate the interaction between the multimedia component 2408 and the processing component 2402.

The memory 2404 is configured to store various types of data to support the operation of the device 2400. Examples of such data include instructions for any application or method operated on device 2400, such as the contact data, the phone book data, messages, pictures, videos, and the like. The memory 2404 can be implemented by any type of volatile or non-volatile storage device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 2406 provides power to various components of the device 2400. The power component 2406 can include a power management system, one or more power sources, and other components associated with the generation, management, and distribution of power in the device 2400.

The multimedia component 2408 includes a screen providing an output interface between the device 2400 and the user. In some embodiments, the screen can include a liquid crystal display (LCD) and a touch panel (TP). In some embodiments, an organic light-emitting diode (OLED) display or other types of displays can be employed.

If the screen includes the touch panel, the screen can be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 2408 includes a front camera and/or a rear camera. When the device 2400 is in an operation mode, such as a photographing mode or a video mode, the front camera and/or the rear camera can receive external multimedia datum. Each of the front camera and the rear camera may be a fixed optical lens system or have focus and optical zoom capability.

The audio component 2410 is configured to output and/or input an audio signal. For example, the audio component 2410 includes a microphone (MIC) configured to receive an external audio signal when the device 2400 is in an operation mode, such as a call mode, a recording mode, and a voice recognition mode. The received audio signal may be further stored in the memory 2404 or sent via the communication component 2416. In some embodiments, the audio component 2410 also includes a speaker for outputting the audio signal.

The I/O interface 2412 provides an interface between the processing component 2402 and peripheral interface modules, such as a keyboard, a click wheel, buttons, and the like. These buttons may include, but are not limited to, a home button, a volume button, a starting button, and a locking button.

The sensor component 2414 includes one or more sensors for providing status assessments of various aspects of the device 2400. For example, the sensor component 2414 can detect an open/closed status of the device 2400, relative positioning of components, such as the display and the keypad of the device 2400. The sensor component 2414 can also detect a change in position of one component of the device 2400 or the device 2400, the presence or absence of user contact with the device 2400, an orientation, or an acceleration/deceleration of the device 2400, and a change in temperature of the device 2400. The sensor component 2414 can include a proximity sensor configured to detect the presence of nearby objects without any physical contact. The sensor component 2414 can also include a light sensor, such as a CMOS or CCD image sensor, configured to use in imaging applications. In some embodiments, the sensor component 2414 can also include an accelerometer sensor, a gyroscope sensor, a magnetic sensor, a pressure sensor, or a temperature sensor.

The communication component 2416 is configured to facilitate wired or wireless communication between the device 2400 and other devices. The device 2400 can access a wireless network based on a communication standard, such as WiFi, 2G or 3G, or a combination thereof. In some embodiments, the communication component 2416 receives broadcast signals or broadcast associated information from an external broadcast management system via a broadcast channel. In some embodiments, the communication component 2416 also includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In some embodiments, the device 2400 may be implemented with one or more application specific integrated circuits (ASICs), digital signal processors (DSPs), digital signal processing devices (DSPDs), programmable logic devices (PLDs), field programmable Gate array (FPGA), controller, microcontroller, microprocessor or other electronic components.

In some embodiments, there is also provided a non-transitory computer- readable storage medium including instructions, such as a memory 2404 including instructions executable by the processor 2420 of the device 2400 to perform the above described method. For example, the non-transitory computer readable storage medium can be a ROM, a Random-Access Memory (RAM), a CD-ROM, a magnetic tape, a floppy disc, an optical data storage device, and so on.

There is provided a non-transitory computer-readable storage medium, when instructions in the storage medium are executed by a processor of a mobile terminal, the mobile terminal is caused to perform a method for displaying notification information, the method includes: determining the notification information belonging to preset categories; and the preset categories are determined according to the content of the notification information; aggregating the notification information belonging to a same preset category into a notification information set; displaying preset information of the notification information set.

The terms "first" and "second" are used for descriptive purposes only and are not to be construed as indicating or implying a relative importance or implicitly indicating the number of technical features indicated. Thus, elements referred to as "first" and "second" can include one or more of the features either explicitly or implicitly. In the description of the present disclosure, "a plurality" indicates two or more unless specifically defined otherwise.

In the present disclosure, the terms "installed," "connected," "coupled," "fixed" and the like shall be understood broadly, and can be either a fixed connection or a detachable connection, or integrated, unless otherwise explicitly defined. These terms can refer to mechanical or electrical connections, or both. Such connections can be direct connections or indirect connections through an intermediate medium. These terms can also refer to the internal connections or the interactions between elements. The specific meanings of the above terms in the present disclosure can be understood by those of ordinary skill in the art on a case-by-case basis.

In the description of the present disclosure, the terms "one embodiment," "some embodiments," "example," "specific example," or "some examples," and the like can indicate a specific feature described in connection with the embodiment or example, a structure, a material or feature included in at least one embodiment or example. In the present disclosure, the schematic representation of the above terms is not necessarily directed to the same embodiment or example.

It is to be understood that "multiple" mentioned in the present disclosure refers to two or more than two. "And/or" describes an association relationship of associated objects and represent that three relationships can exist. For example, A and/or B can represent three conditions, i.e., independent existence of A, coexistence of A and B and independent existence of B. Character "/" usually represents that previous and next associated objects form an "or" relationship.

Moreover, the particular features, structures, materials, or characteristics described can be combined in a suitable manner in any one or more embodiments or examples. In addition, various embodiments or examples described in the specification, as well as features of various embodiments or examples, can be combined and reorganized.

In some embodiments, the control and/or interface software or app can be provided in a form of a non-transitory computer-readable storage medium having instructions stored thereon is further provided. For example, the non-transitory computer-readable storage medium can be a ROM, a CD-ROM, a magnetic tape, a floppy disk, optical data storage equipment, a flash drive such as a USB drive or an SD card, and the like.

Implementations of the subject matter and the operations described in this disclosure can be implemented in digital electronic circuitry, or in computer software, firmware, or hardware, including the structures disclosed herein and their structural equivalents, or in combinations of one or more of them. Implementations of the subject matter described in this disclosure can be implemented as one or more computer programs, i.e., one or more portions of computer program instructions, encoded on one or more computer storage medium for execution by, or to control the operation of, data processing apparatus.

Alternatively, or in addition, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them.

Moreover, while a computer storage medium is not a propagated signal, a computer storage medium can be a source or destination of computer program instructions encoded in an artificially-generated propagated signal. The computer storage medium can also be, or be included in, one or more separate components or media (e.g., multiple CDs, disks, drives, or other storage devices). Accordingly, the computer storage medium can be tangible.

The operations described in this disclosure can be implemented as operations performed by a data processing apparatus on data stored on one or more computer-readable storage devices or received from other sources.

The devices in this disclosure can include special purpose logic circuitry, e.g., an FPGA (field-programmable gate array), or an ASIC (application-specific integrated circuit). The device can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The devices and execution environment can realize various different computing model infrastructures, such as web services, distributed computing, and grid computing infrastructures.

A computer program (also known as a program, software, software application, app, script, or code) can be written in any form of programming language, including compiled or interpreted languages, declarative or procedural languages, and it can be deployed in any form, including as a stand-alone program or as a portion, component, subroutine, object, or other portion suitable for use in a computing environment. A computer program can, but need not, correspond to a file in a file system. A program can be stored in a portion of a file that holds other programs or data (e.g., one or more scripts stored in a mark-up language document), in a single file dedicated to the program in question, or in multiple coordinated files (e.g., files that store one or more portions, sub-programs, or portions of code). A computer program can be deployed to be executed on one computer or on multiple computers that are located at one site or distributed across multiple sites and interconnected by a communication network.

The processes and logic flows described in this disclosure can be performed by one or more programmable processors executing one or more computer programs to perform actions by operating on input data and generating output. The processes and logic flows can also be performed by, and apparatus can also be implemented as, special purpose logic circuitry, e.g., an FPGA, or an ASIC.

Processors or processing circuits suitable for the execution of a computer program include, by way of example, both general and special purpose microprocessors, and any one or more processors of any kind of digital computer. Generally, a processor will receive instructions and data from a read-only memory, or a random-access memory, or both. Elements of a computer can include a processor configured to perform actions in accordance with instructions and one or more memory devices for storing instructions and data.

Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few.

Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented with a computer and/or a display device, e.g., a VR/AR device, a head-mount display (HMD) device, a head-up display (HUD) device, smart eyewear (e.g., glasses), a CRT (cathode-ray tube), LCD (liquid-crystal display), OLED (organic light emitting diode), TFT (thin-film transistor), plasma, other flexible configuration, or any other monitor for displaying information to the user and a keyboard, a pointing device, e.g., a mouse, trackball, etc., or a touch screen, touch pad, etc., by which the user can provide input to the computer.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components.

The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While this specification contains many specific implementation details, these should not be construed as limitations on the scope of any claims, but rather as descriptions of features specific to particular implementations. Certain features that are described in this specification in the context of separate implementations can also be implemented in combination in a single implementation. Conversely, various features that are described in the context of a single implementation can also be implemented in multiple implementations separately or in any suitable subcombination.

Moreover, although features can be described above as acting in certain combinations and even initially claimed as such, one or more features from a claimed combination can in some cases be excised from the combination, and the claimed combination can be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing can be advantageous. Moreover, the separation of various system components in the implementations described above should not be understood as requiring such separation in all implementations, and it should be understood that the described program components and systems can generally be integrated together in a single software product or packaged into multiple software products.

As such, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking or parallel processing can be utilized.

It is intended that the specification and embodiments be considered as examples only. Other embodiments of the disclosure will be apparent to those skilled in the art in view of the specification and drawings of the present disclosure. That is, although specific embodiments have been described above in detail, the description is merely for purposes of illustration. It should be appreciated, therefore, that many aspects described above are not intended as required or essential elements unless explicitly stated otherwise.
Various modifications of, and equivalent acts corresponding to, the disclosed aspects of the example embodiments, in addition to those described above, can be made by a person of ordinary skill in the art, having the benefit of the present disclosure, without departing from the scope of the disclosure defined in the following claims, the scope of which is to be accorded the broadest interpretation so as to encompass such modifications and equivalent structures.

## Claims

1. A method for displaying notification information, applied to a terminal and comprising:
determining the notification information belonging to preset categories (S11);
aggregating the notification information determined into a collection of notification information according to the preset categories (S12), wherein the collection of notification information comprises notification information sets of one or more preset categories; and
displaying summary information of the collection of notification information on a notification display page (S13), wherein the notification display page comprises a notification bar.

2. The method for displaying notification information according to claim 1, wherein the displaying summary information of the collection of notification information on a notification display page (S13) comprises:
displaying summary information of the notification information sets of each of the preset categories on the notification display page (S131).

3. The method for displaying notification information according to claims 1 or 2, further comprising:
receiving a trigger signal of a first preset type from a display area of the summary information of the collection of notification information (S14); and
jumping to a notification information display page according to the trigger signal of the first preset type (S15), wherein the notification information in the collection of notification information is displayed on the notification information display page, and the notification information display page is different from the notification display page.

4. The method for displaying notification information according to claim 3, further comprising:
displaying each piece of notification information in a separate area (S151); and
displaying all notification information according to a preset order in a waterfall view manner (S152).

5. The method for displaying notification information according to claim 4, wherein a height of the separate area is positively correlated to an amount of text data of corresponding notification information (S1511).

6. The method for displaying notification information according to claims 4 or 5, further comprising:
receiving a trigger signal of a second preset type from the separate area (S1512);
displaying a configuration page for the notification information displayed in the separate area (S1513), wherein configuration items related to notification information aggregation are displayed on the configuration page.

7. The method for displaying notification information according to any of claims 1 to 6, wherein the displaying summary information of the collection of notification information on a notification display page (S13) comprises:
displaying the summary information of the collection of notification information on an aggregation bar of the notification display page (S131).

8. The method for displaying notification information according to any of claims 1 to 7, wherein
the summary information of the collection of notification information and notification information of a non-preset category are displayed according to a preset priority order (S16).

9. The method for displaying notification information according to any of claims 1 to 8, further comprising:
classifying the preset categories according to content and/or senders of the notification information (S17).

10. The method for displaying notification information according to claims 8 or 9, further comprising:
receiving a trigger signal of a clear button in the notification display page (S18); and
clearing all notification information in a display area of the non-preset category, and keep displaying the summary information of the collection of notification information and all notification information in the collection of notification information (S 19).

11. A device for displaying notification information, comprising:
a determination module (231), configured to determine the notification information belonging to preset categories;
an aggregation module (232), configured to aggregate the notification information determined into a collection of notification information according to the preset categories, wherein the collection of notification information comprises notification information sets of one or more preset categories; and
a display module (233), configured to display summary information of the collection of notification information on a notification display page, wherein the notification display page comprises a notification bar.

12. The device for displaying notification information according to claim 11, further comprising:
a first receiving module (234), configured to receive a trigger signal of a first preset type from a display area of the summary information of the collection of notification information; and
a jump module (235), configured to jump to a notification information display page according to the trigger signal of the first preset type;
wherein the display module (233) is configured to display the notification information in the collection of notification information on the notification information display page, wherein the notification information display page is different from the notification display page.

13. The device for displaying notification information according to claim 12, wherein the display module (233) is configured to:
display each piece of notification information in a separate area; and
display all notification information according to a preset order in a waterfall view manner.

14. The device for displaying notification information according to claim 13, further comprising:
a second receiving module (236), configured to receive a trigger signal of a second preset type from the separate area;
wherein the display module (233) is configured to display a configuration page for the notification information displayed in the separate area, wherein configuration items related to notification information aggregation are displayed on the configuration page.

15. The device for displaying notification information according to any claims 11 to 14, wherein the determination module (231) is configured to determine the preset categories according to content and/or senders of the notification information.
